**Europäisches Patentamt**

**European Patent Office**

**Office européen des brevets**

(19)

(11) Veröffentlichungsnummer: **0 034 327**
**B1**

(12) ## EUROPÄISCHE PATENTSCHRIFT

(45) Veröffentlichungstag der Patentschrift:
**14.12.83**

(51) Int. Cl.³: **B 61 F 5/30**

(21) Anmeldenummer: **81100933.1**

(22) Anmeldetag: **11.02.81**

(54) **Abwiegevorrichtung für blattgefederte Schienenfahrzeuge.**

(30) Priorität: **13.02.80 DE 3005391**

(43) Veröffentlichungstag der Anmeldung:
**26.08.81 Patentblatt 81/34**

(45) Bekanntmachung des Hinweises auf die Patenterteilung:
**14.12.83 Patentblatt 83/50**

(84) Benannte Vertragsstaaten:
**BE CH DE FR GB LI SE**

(56) Entgegenhaltungen:
**AT - A - 295 592**
**DE - A - 1 605 234**
**DE - A - 1 955 912**
**DE - A - 1 957 531**
**DE - A - 2 552 855**
**DE - B - 2 258 997**
**FR - A - 1 558 703**
**FR - A - 1 562 362**
**FR - A - 2 143 404**
**GB - A - 1 253 938**

(73) Patentinhaber: **Knorr-Bremse GmbH, Moosacher Strasse 80, D-8000 München 40 (DE)**

(72) Erfinder: **Woseglen, Bernd, Ringseisstrasse 8, D-8000 München 2 (DE)**
Erfinder: **Staltmeir, Josef, Dantestrasse 18, D-8000 München 19 (DE)**
Erfinder: **Gmelch, Xaver, Dreimühlenstrasse 10, D-8000 München 5 (DE)**

## Abwiegevorrichtung für blattgefederte Schienenfahrzeuge

Die Erfindung bezieht sich auf eine Abwiegevorrichtung für blattgefederte Schienenfahrzeuge,
— mit einem Doppelschakengehänge zwischen der auf einem Achslager aufstehenden Blattfeder und einem am Fahrzeugrahmen befestigten Federbock,
— wobei das Doppelschakengehänge zwei Kettenglieder umfasst,
— welche durch ein Zwischenstück miteinander verbunden sind
— und deren jedes Kettenglied aus zwei parallel mit Abstand nebeneinander angeordneten, in das Zwischenstück eingehängten Einzelgliedern besteht,
— wobei das Zwischenstück in die Öffnungen der Einzelglieder eingreifende Führungsansätze aufweist,
— und mit einem einen Ausgangs-Druckmitteldruck proportional zur jeweiligen Zugspannung im Doppelschakengehänge steuernden Wiegeventil,
— welches über wenigstens ein Zwischenteil am Doppelschakengehänge angelenkt und von der Zugspannung in diesem belastet ist,
— und dessen Messachse koaxial zur Längsmittelachse des Doppelschakengehänges verläuft.

Derartige Abwiegevorrichtungen sind mit der DE-B-2 258 997 und der DE-A-2 552 855 bekanntgeworden. Bei diesen bekannten Abwiegevorrichtungen ist das Wiegeventil in einer besonderen Anlenkvorrichtung des Doppelschakengehänges am Federbock angeordnet; diese Anlenkvorrichtung erfordert zusätzliche Bauteile, einen zusätzlichen Bauraum und konstruktive Änderungen am bisher üblichen, durch eine einfache Bolzenanordnung mit dem Doppelschakengehänge verbundenen Federbock. Die OE-PS-295 592 zeigt ein für die Abwiegevorrichtung geeignetes Wiegeventil mit innerer Kraftuntersetzung.

Die FR-A-1 558 703 zeigt eine Abwiegevorrichtung für blatt- oder schraubengefederte Schienenfahrzeuge, wobei in Serie zur Blatt- oder Schraubenfeder zwischen diese und einen fahrzeugrahmenfesten Federbock eine im wesentlichen U-förmige Messfeder eingeordnet ist. Die Schenkelenden der Messfeder sind dabei über Bolzen oder Kettenglieder an die Schrauben- oder Blattfeder bzw. an den Federbock angelenkt; beim blattgefederten Schienenfahrzeug kann die Messfeder somit als ein Zwischen-Stück im Doppelschakengehänge angesehen werden. Der gegenseitige Abstand der Schenkelenden der Messfeder dient als Messwert für die Fahrzeugbelastung, er wird durch bowdenzugartige Drahtseile abgegriffen und einer lastabhängigen Bremsregelung zugeführt. Die Messfeder kann jedoch durch ihre Elastizität die Belastungsverteilung der Fahrzeugfederung verfälschend beeinflussen.

Aus der FR-A-1 562 362 ist es bekannt, zwischen die Kettenglieder eines Doppelschakengehänges ein kettengliedartiges Zwischenstück einzuhängen, dessen einer Schenkel mit einem Dehnmessstreifen zum Abgreifen eines fahrzeuglastabhängigen, elektrischen Signals versehen ist. Es ist eine Stromversorgung nötig, diese Abwiegevorrichtung ist somit nur an eine Stromversorgung aufweisenden Fahrzeugen verwendbar.

Es ist Aufgabe der Erfindung, eine Abwiegevorrichtung der eingangs genannten Art derart auszugestalten, dass sie keinen zusätzlichen Bauraum zu bisher üblichen Doppelschaken-Aufhängevorrichtungen von blattgefederten Schienenfahrzeugen benötigt, dabei mit einer geringstmöglichen Zahl einfacher, zusätzlicher Bauteile auskommt und vor allem keinerlei Änderungen am Federbock bzw. dessen üblicher, einfacher Verbindung mit dem Doppelschakengehänge erfordert.

Diese Aufgabe wird nach der Erfindung durch eine Ausbildung gemäss der Merkmale gelöst, dass
— das Zwischenstück ein erstes und ein zweites Zwischenteil aufweist,
— deren eines in das eine und deren anderes in das andere Kettenglied eingehängt ist,
— deren wenigstens eines wenigstens einen Führungsansatz aufweist,
— wobei eine die beiden Zwischenstücke um einen begrenzten Hubweg in Richtung der Längsmittelachse gegeneinander parallel verschieblich führende Führungseinrichtung vorgesehen ist,
— und wobei das Wiegeventil zwischen den beiden Zwischenteilen, diese in Zugspannungsrichtung gegeneinander abstützend, angeordnet ist.

Durch diese Ausbildung der Abwiegevorrichtung wird das Wiegeventil in das bisher bereits vorhandene Zwischenstück des Doppelschakengehänges integriert, so dass nur dieses Zwischenstück des Doppelschakengehänges eine besondere Ausbildung erfahren muss. Die beiden Anlenkstellen des Doppelschakengehänges an der Blattfeder bzw. am Federbock können somit von der Einordnung des Wiegeventils in das Zwischenstück völlig unbeeinflusst in ihrer bisher üblichen Konstruktionsart beibehalten werden, es ist kein zusätzlicher Bauraum erforderlich und vor allem der Federbock bedarf keinerlei baulicher Abänderung. Die erfindungsgemäss ausgebildete Abwiegevorrichtung ist somit besonders für eine nachträgliche Ausrüstung bisher keinerlei Abwiegevorrichtung aufweisender, blattgefederter Schienenfahrzeuge geeignet, da ihr Einbau lediglich den Austausch des bisher üblichen Zwischenstücks gegen ein neues Zwischenstück ohne irgendwelche weiteren Änderungen an der Fahrzeugaufhängung und -abfederung erfordert.

Die nach weiteren Merkmalen der Erfindung vorteilhafte Ausgestaltung der Abwiegevorrichtung kann den Unteransprüchen entnommen werden.

In der Zeichnung ist ein Ausführungsbeispiel einer nach der Erfindung ausgebildeten Abwiegevorrichtung dargestellt, und zwar zeigt:

Fig. 1 eine Radaufhängung für ein blattgefedertes Schienenfahrzeug und

Fig. 2 als Einzelheit einen Schnitt durch das Zwischenstück des Doppelschakengehänges.

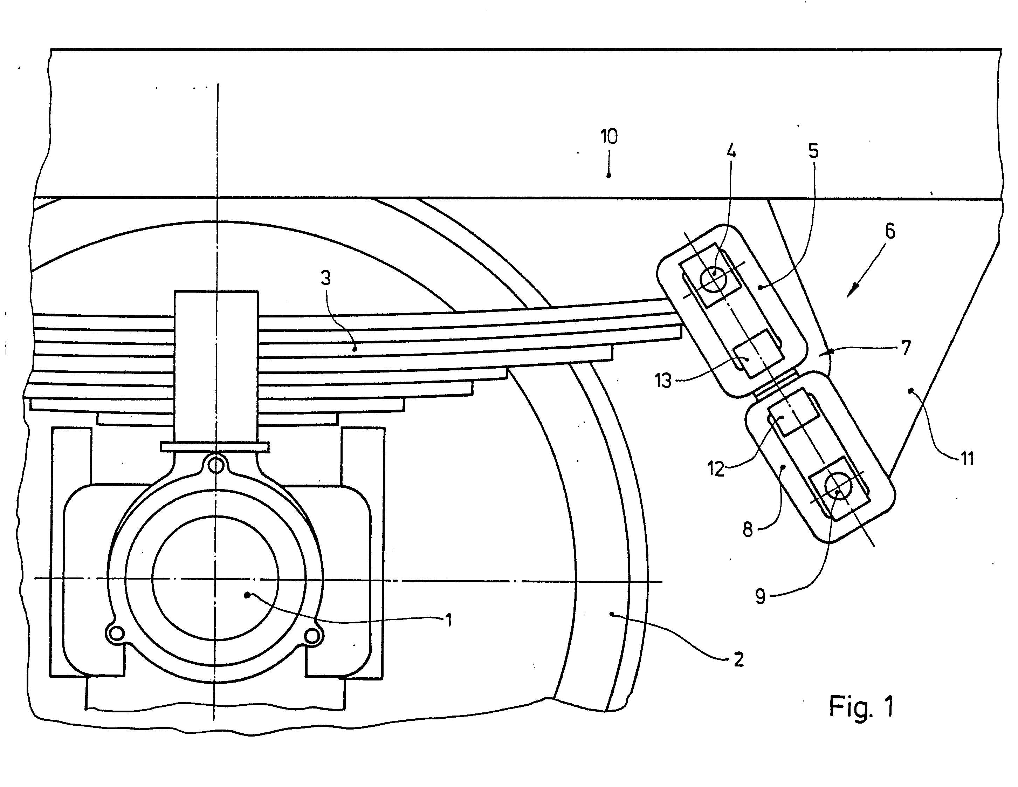

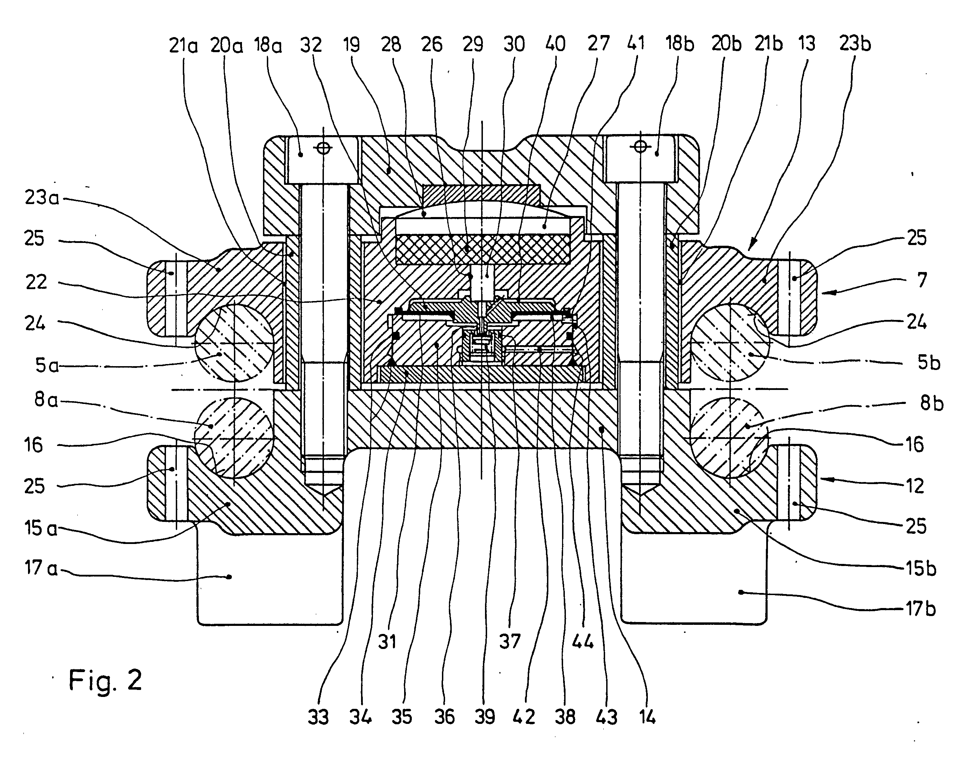

Nach Fig. 1 steht auf dem Achslager 1 eines Schienenfahrzeug-Radsatzes 2 eine Blattfeder 3 auf, deren Ende mittels eines Bolzens 4 am oberen Kettenglied 5 eines sich in üblicher Weise schräg nach unten erstreckenden Doppelschakengehänges 6 angelenkt ist. Das Kettenglied 5 ist an seinem unteren Ende mittels eines Zwischenstücks 7 mit einem unteren Kettenglied 8 verbunden, dessen unteres Ende in üblicher Weise mittels eines Bolzens 9 an einem mit dem Fahrzeugrahmen 10 verbundenen Federbock 11 angelenkt ist. Das Zwischenstück 7 weist dabei ein erstes, in das untere Kettenglied 8 eingehängtes Zwischenteil 12 und ein zweites, in das obere Kettenglied 5 eingehängtes Zwischenteil 13 auf. Es ist noch zu erwähnen, dass jedes Kettenglied 5 und 8 aus jeweils zwei parallel mit Abstand nebeneinander angeordneten, jeweils für sich in das Zwischenstück 7 eingehängten Einzelgliedern besteht, wie es bei Doppelschakengehängen bisheriger Bauart üblich und auch aus der nachfolgend beschriebenen Fig. 2 entnehmbar ist.

Nach Fig. 2 weist das erste Zwischenteil 12 des Zwischenstücks 7 einen Grundkörper 14 auf, der beiderseits abgesetzte Endabschnitte 15a bzw. 15b mit gerundeter, nahezu halbrund umlaufender Nut 16 zum Einhängen der beiden in Fig. 2 nur strichpunktiert dargestellten Einzelglieder 8a und 8b des gemäss Fig. 1 unteren Kettengliedes 8 trägt. Gegenüberliegend zur Nut 16 sind die beiden Endabschnitte 15a und 15b mit Führungsansätzen 17a bzw. 17b versehen, welche in die von den Einzelgliedern 8a und 8b umschlossenen Innenräume des unteren Kettengliedes 8 eingreifen und die richtige Lage des Zwischenteils 12 im Doppelschakengehänge sichern. Nahe seines Übergangs in die Endabschnitte 15a und 15b sind mit dem Grundkörper 14 zwei Schrauben 18a und 18b verschraubt, welche sich in Längsrichtung des Doppelschakengehänges von den Einzelgliedern 8a und 8b weg erstrecken. Die beiden Schrauben 18a und 18b haltern andererseits ein dem Grundkörper 14 mit Abstand gegenüberstehendes Druckstück 19, wobei zwischen dieses Druckstück 19 und den Grundkörper 14 die Schrauben 18a und 18b umgebende Hülsen 20a und 20b eingespannt sind. Die Hülsen 20a und 20b durchgreifen mit geringem, radialem Spiel zwei Bohrungen 21a bzw. 21b im Grundkörper des zweiten Zwischenteils 13, wobei die Hülsen 20a und 20b etwas länger sind als es der Stärke des Grundkörpers 22 entspricht und der Grundkörper 22 somit um geringe Hubwege auf den Hülsen 20a und 20b verschieblich ist. Der Grundkörper 22 weist seitlich der Bohrungen 21a und 21b den Endabschnitten 15a und 15b spiegelbildlich gegenüberstehende, entsprechend geformte Endabschnitte 23a und 23b, in deren Nuten 24 die Einzelglieder 5a und 5b des Kettengliedes 5 (Fig. 1) eingehängt sind. Seitlich der Nuten 16 und 24 sind die Endabschnitte 15a und 23a sowie 15b und 23b mit in Längsrichtung des Doppelschakengehänges verlaufenden, fluchtenden Bohrungen 25 versehen, durch welche nach Einhängen der Einzelglieder 5a und 8a bzw. 5b und 8b in Fig. 2 nicht dargestellte Splinte oder Stifte einführbar sind, welche den Zwischenraum zwischen den Endabschnitten 15a und 23a bzw. 15b und 23b überbrücken und so ein ungewolltes Aushängen der Einzelglieder 5a, 5b, 8a und 8b aus den Nuten 16 bzw. 24 verhindern. Zwischen den Bohrungen 21a und 21b weist der Grundkörper 22 eine mehrfach abgesetzte Durchbohrung 26 auf, welche entsprechend dem Innenraum eines üblichen Gehäuses für ein Wiegeventil bekannter Bauart ausgestaltet ist; der Grundkörper 22 bildet somit zugleich das Gehäuse für das nachstehend beschriebene Wiegeventil.

Auf seiten des Druckstücks 19 ist in einem Abschnitt grossen Durchmessers der Durchbohrung 26 eine Druckplatte 27 verschieblich gelagert, welche sich mit ihrer äusseren, kugelabschnittartig gewölbten Oberfläche 28 gegen eine entsprechend geformte Lagerfläche des Druckstücks 19 abstützt. Andererseits liegt die Druckplatte 27 auf einer im Grundkörper 22 angeordneten Gummiplatte 29 auf. Andererseits erstreckt sich von der Gummiplatte 29 ein Stössel 30 relativ kleinen Durchmessers zu einem mittels einer Membrane 31 abgedichteten, mit dem Stössel 30 verbundenen Kolbenglied 32, welches einen bezogen auf den Stössel 30 grossen Durchmesser, nach dem Ausführungsbeispiel gemäss Fig. 2 etwa den Durchmesser der Gummiplatte 29, besitzt. Der äussere Rand der Membrane 31 ist im Grundkörper 22 mittels eines durch Dichtringe 33 abgedichteten von seiten des Grundkörpers 44 in einen erweiterten Abschnitt der Durchbohrung 26 eingesetzten und durch einen Deckel 34 gehaltenen Einsatzkörper 35 eingespannt. Im Einsatzkörper 35 befindet sich ein von einem Ventilrohransatz 36 des Kolbengliedes 32 betätigbares Doppelventil 37, welches eine Ausgangskammer 38 bei Annäherung des Kolbengliedes 32 an den Einsatzkörper 35 mit einer Vorratskammer 39 verbindet, bei einem gewissen Sollabstand zwischen Kolbenglied 32 und Einsatzkörper 35 absperrt und bei Entfernung des Kolbengliedes 32 vom Einsatzkörper 35 mit einer Aussenluftkammer 40 verbindet. Die Ausgangskammer 38 und die Vorratskammer 39 sind über Radialkanäle 41 bzw. 42 mit Ringkanälen 43 bzw. 44 im Grundkörper 22 verbunden, von welchen in Fig. 2 nicht ersichtliche, senkrecht zur Zeichenebene der Fig. 2 verlaufende und mit Schlauchanschlüssen zum Zuführen eines Druckmittels zur Vorratskammer 39 bzw. Abführen des gesteuerten Ausgangsdruckes aus der Ausgangskammer 38 münden. Die Aussenluftkammer 40 steht über eine aus Fig. 2 nicht ersichtliche Bohrung gegebenenfalls über ein Luftfilter mit der Atmosphäre in Verbindung. Der in der Ausgangskammer 38 herrschende Druck belastet das Kolbenglied 32 in Richtung zur Gummiplatte 29.

Das somit im Grundkörper 22 als Gehäuse enthaltene, in der Durchbohrung 26 angeordnete und sich von der Druckplatte 27 bis zum Deckel 34 erstreckende Wiegeventil entspricht in seinem wesentlichen Aufbau und auch in seiner Funktionsweise dem in der OE-PS 295 592 beschriebenen Wiegeventil, von welchem hier wesentlich ist, dass es vom Druckstück 19 in Richtung zum Grundkörper 22 gerichtete Anpresskräfte auf die Druckplatte 27 durch die Gummiplatte 29 untersetzt über den Stössel 30 und das Kolbenglied 32 sowie das Doppelventil 37 in einen entsprechenden Druckmitteldruck in der Ausgangskammer 38 umsetzt. Alle Einzelheiten der Funktionsweise des Wiegeventils können der erwähnten OE-PS 295 592 entnommen werden, so dass sich hier weitere Ausführungen zur Funktionsweise erübrigen.

Das vom Fahrzeugrahmen 10 auf den Federbock 11 ausgeübte Fahrzeuggewicht wird über den Bolzen 9 auf das untere Ende des Doppelschakengehänges 6 übertragen, durchsetzt als Zugspannung das Doppelschakengehänge 6 und wird an dessen oberen Ende über den Bolzen 4 auf das Ende der Blattfeder 3 weitergeleitet. Die Blattfeder 3 überträgt die Belastung abgefedert auf das Achslager 1. Die im Doppelschakengehänge 6 somit herrrschende, fahrzeuglastabhängige Zugspannung wirkt über das untere Kettenglied 8 bzw. dessen Einzelglieder 8a und 8b als gemäss Fig. 2 nach unten gerichtete Kraft auf das erste Zwischenteil 12 ein. Die beiden Schrauben 18a und 18b übertragen diese Kraft auf das Druckstück 19, welches sie über die Druckplatte 27 und die Gummiplatte 29 bzw. Druckmittelbelastung des Einsatzkörpers 35 durch das in der Ausgangskammer 38 herrschende Druckmittel auf den Grundkörper 22 des zweiten Zwischenteils 13 überträgt. Von dort wird diese Kraft über das obere Kettenglied 5 bzw. dessen beide Einzelglieder 5a und 5b abgenommen. Es ist wesentlich, dass im statischen Zustand mit in der Ausgangskammer 38 herrschendem, lastabhängigen Druckmitteldruck der Abstand zwischen den beiden Zwischenteilen 12 und 13 unabhängig von der Grösse der Zugspannung zwischen diesen beiden Zwischenteilen stets konstant ist, die Länge des Doppelschakengehänges 6 also ebenfalls unabhängig von der Fahrzeugbelastung konstant ist.

Das Zwischenstück 7 verbindet somit die beiden Kettenglieder 5 und 8 des Doppelschakengehänges 6 so wie die bisher üblichen, einteiligen Zwischenstücke und kann daher ohne weiteres bei vorhandenen Doppelschakengehänge gegen das dortige Zwischenstück ausgetauscht werden. Dabei sind keine weiteren Änderungsarbeiten an der Fahrzeugaufhängung erforderlich, insbesondere ist kein zusätzlicher Bauraum nötig und der Federbock 11 bedarf keinerlei Abänderungen. Es sind lediglich zwei Schlauchleitungen von den am Fahrzeugrahmen gehaltenen, fahrzeuglastabhängig zu steuernden Organen bzw. der Druckmittelquelle zu den in Fig. 2 nicht ersichtlichen Schlauchleitungsanschlüssen am Grundkörper 22 zum Anschluss der Ausgangskammer 38 bzw. der Vorratskammer 39 zu führen.

Bei Ausfall des Druckmitteldrucks setzt sich nach einem geringen, ein Öffnen des Einlassventilsteils des Doppelventils 37 bewirkenden Hub das Druckstück 19 mit seinen seitlichen Abschnitten nahe der Schrauben 18a und 18b anschlagartig auf entsprechende Gegenflächen am zweiten Zwischenteil 13 auf, die Zugkraftbeanspruchung des Doppelschakengehänges 6 wird in diesem Fall also unter vernachlässigbar kleiner Verlängerung des Zwischenstücks 7 unmittelbar mechanisch vom ersten Zwischenteil 12 auf das zweite Zwischenteil 13 übertragen.

In Abänderung vom dargestellten Ausführungsbeispiel ist es natürlich auch möglich, anstelle des dargestellten Wiegeventils nach der OE-PS 295 592 ein andersartiges Wiegeventil bekannter Bauart in den Grundkörper 22 des zweiten Zwischenteils 13 vom Druckstück 19 belastbar einzubauen, beispielsweise kann anstelle der Gummiplatte 29 ein fluidisches oder plastisch verformbares Übertragungsmedium oder auch mechanisches, starres oder elastisches Übersetzungsgetriebe vorgesehen sein. Bei geringen Fahrzeugbelastungen kann gegebenenfalls völlig auf diese Kraftuntersetzungsvorrichtung verzichtet und die vom Druckstück 19 ausgeübte Belastung unmittelbar auf den Stössel 30 übertragen werden. Auch ist es möglich, anstelle des Wiegeventils eine elektrische Kraftmessvorrichtung vorzusehen, welche die Anpresskraft des Druckstücks 19 an den Grundkörper 22 in einen entsprechenden, elektrischen Messwert umsetzt.

*Bezugszeichenliste*

1 = Achslager
2 = Radsatz
3 = Blattfeder
4 = Bolzen
5 = Kettenglied
5a / 5b = Einzelglied
6 = Doppelschakengehänge
7 = Zwischenstück
8 = Kettenglied
8a / 8b = Einzelglied
9 = Bolzen
10 = Fahrzeugrahmen
11 = Federbock
12 = 1. Zwischenteil
13 = 2. Zwischenteil
14 = Grundkörper
15a / 15b = Endabschnitte
16 = Nut
17a / 17b = Führungsansatz
18a / 18b = Schrauben
19 = Druckstück
20a / 20b = Hülse
21a / 21b = Bohrung
22 = Grundkörper
23a / 23b = Endabschnitt
24 = Nut
25 = Bohrung
26 = Druckbohrung
27 = Druckplatte
28 = Oberfläche
29 = Gummiplatte
30 = Stössel
31 = Membrane
32 = Kolbenglied
33 = Dichtringe
34 = Deckel
35 = Einsatzkörper
36 = Ventilrohransatz
37 = Doppelventil
38 = Ansaugkammer
39 = Vorratskammer

40 = Aussenluftkammer

41 ⎫
42 ⎬ Radialkanal

43 ⎫
44 ⎬ Ringkanal

## Patentansprüche

1. Abwiegevorrichtung für blattgefederte Schienenfahrzeuge,
— mit einem Doppelschakengehänge (6) zwischen der auf einem Achslager (1) aufstehenden Blattfeder (3), und einem am Fahrzeugrahmen (10) befestigten Federbock (11),
  — wobei das Doppelschakengehänge (6) zwei Kettenglieder (5 und 8) umfasst,
  — welche durch ein Zwischenstück (7) miteinander verbunden sind
  — und deren jedes Kettenglied (5 bzw. 8) aus zwei parallel mit Abstand nebeneinander angeordneten, in das Zwischenstück eingehängten Einzelgliedern (5a, 5b bzw. 8a, 8b) besteht,
— wobei das Zwischenstück (7) in die Öffnungen der Einzelglieder (8a, 8b) eingreifende Führungsansätze (17a und 17b) aufweist,
— und mit einem einen Ausgangs-Druckmitteldruck proportional zur jeweiligen Zugspannung im Doppelschakengehänge (6) steuernden Wiegeventil,
  — welches über wenigstens ein Zwischenteil (12, 13) am Doppelschakengehänge (6) angelenkt und von der Zugspannung in diesem belastet ist,
  — und dessen Messachse koaxial zur Längsmittelachse des Doppelschakengehänges (6) verläuft,
gekennzeichnet durch die Merkmale, dass
— das Zwischenstück (7) ein erstes und ein zweites Zwischenteil (12 und 13) aufweist,
  — deren eines (12) in das eine (8) und deren anderes (13) in das andere (5) Kettenglied eingehängt ist,
  — deren wenigstens eines (12) einen Führungsansatz (17a und 17b) aufweist,
— wobei eine die beiden Zwischenstücke (12 und 13) um einen begrenzten Hubweg in Richtung der Längsmittelachse gegeneinander parallel verschieblich führende Führungseinrichtung vorgesehen ist,
— und wobei das Wiegeventil zwischen den beiden Zwischenteilen (12 und 13), diese in der Zugspannungsrichtung gegeneinander abstützend angeordnet ist.

2. Abwiegevorrichtung nach Anspruch 1, dadurch gekennzeichnet, dass das erste Zwischenteil (12) einen das zweite Zwischenteil (13) in Zugspannungsrichtung hintergreifenden Abschnitt (Druckstück 19) aufweist und dass das druckkraftbeanspruchbare Wiegeventil zwischen diesem Abschnitt und dem zweiten Zwischenteil (13) angeordnet ist.

3. Abwiegevorrichtung nach Anspruch 2, dadurch gekennzeichnet, dass das zweite Zwischenteil (13) nahe der Einhängestellen der Einzelglieder (5a und 5b) Durchbrechungen aufweist, welche von am ersten Zwischenteil (12) entsprechend angeordneten, sich in Zugspannungsrichtung erstreckenden Zugankern durchsetzt sind, deren Enden mit einem den Abschnitt bildenden Druckstück (19) verbunden sind.

4. Abwiegevorrichtung nach Anspruch 3, dadurch gekennzeichnet, dass das zweite Zwischenteil (13) als Durchbrechungen zwei Bohrungen (21a und 21b) aufweist, in welchen die beiden zylindrischen Zuganker des ersten Zwischenteils (12) verschieblich geführt sind.

5. Abwiegevorrichtung nach Anspruch 4, dadurch gekennzeichnet, dass das Druckstück (19) mittels zweier die Zuganker bildender, im Bereich der Bohrungen (21a und 21b) von Hülsen (20a und 20b) umgebender Schrauben (18a und 18b) am ersten Zwischenteil (12) befestigt ist.

6. Abwiegevorrichtung nach Anspruch 4 oder 5, dadurch gekennzeichnet, dass das Wiegeventil im zweiten Zwischenteil (13) zwischen dessen Bohrungen (21a und 21b) angeordnet ist.

7. Abwiegevorrichtung nach Anspruch 6, dadurch gekennzeichnet, dass das Wiegeventil in an sich bekannter Weise mit Kraftuntersetzung durch ein verformbares, weitgehend volumenkonstantes Medium (Gummiplatte 29) ausgebildet ist und dass das zweite Zwischenteil (13) unmittelbar das Ventilgehäuse für das Wiegeventil bildet.

## Claims

1. Weighing device for leaf-sprung rolling stock,
— having a double chain-link hanger (6) between the leaf spring (3) lying on an axle bearing (1), and a spring bracket (11),
  — the double chain-link hanger (6) comprising two chain members (5 and 8),
  — which are connected to ech other by an interpiece (7),
  — and each of whose chain members (5, respectively 8) consists of two individual members (5a, 5b, respectively 8a, 8b) in parallel, spaced arrangement and suspended into the interpiece,
— the interpiece (7) comprising guide extensions (17a and 17b) projecting into the apertures in the individual members (8a, 8b),
— and having a weighing valve controlling an output pressure-medium pressure in proportion to the respective tensile stress in the double chain-link hanger (6),
  — which valve is hinged by means of at least one linking part (12, 13) to the double chain-link
  — hanger (6) and is loaded by the tensile stress therein,
  — and whose measuring axis extends coaxially to the middle longitudinal axis of the double chain-link hanger (6),
characterised by the facts that
— the interpiece (7) comprises a first and a second linking part (12 and 13),
  — one of which (12) is suspended into one chain member (8) and the other or which (13) is suspended into the other chaim member (5),
  — at least one of which (12) comprises a guide extension (17a and 17b),
— there being provided a guide device which displaceably guides the two linking parts (12 and 13) parallel to each other for a defined path of travel in the direction of the middle longitudinal axis,
— and the weighing valve being arranged between the two linking parts (12 and 13), supporting these mutually in the direction of tensile stress.

2. Weighing device according to claim 1, characterised in that the first linking part (12) comprises a section (thrust piece 19) projecting behind the second linking part (13) in the direction of tensile stress, and in that the weighing valve, which is subject to the force of pressure, is arranged between this section and the second linking part (13).

3. Weighing device according to claim 2, characterised in that the second linking part (13) comprises, in the vicinity of the suspension points for the individual members (5a and 5b), through-openings, which are penetrated by tension rods appropriately arranged on the first linking part (12) and extending in the direction of tensile stress, and whose ends are connected to a thrust piece (19) forming the section.

4. Weighing device according to claim 3, characterised in that the second linking part (13) comprises two bores (21a and 21b) as through-openings, into which the two cylindrical tension rods of the first linking part (12) are displaceably guided.

5. Weighing device according to claim 4, characterised in that the thrust piece (19) is secured to the first linking part (12) by means of two screws (18a and 18b) forming the tension rods and enclosed by sleeves (20a and 20b) in the area of the bores (21a and 21b).

6. Weighing device according to claim 4 or 5, characterised in that the weighing valve is arranged in the second linking part (13) between its bores (21a and 21b).

7. Weighing device according to claim 6, characterised in that the weighing valve is formed in a manner known *per se* with power reduction by a mouldable medium (rubber plate 29) whose volume is largely constant, and in that the second linking part (13) indirectly forms the valve housing for the weighing valve.

**Revendications**

1. Dispositif de pesée pour véhicules sur rails à suspension à ressorts à lames,
— avec une suspension à double crochet (6) entre le ressort à lames (3) reposant sur une boîte d'essieu (1) et un support de ressort (11) fixé au châssis du véhicule (10),
   — la suspension à double crochet (6) comportant deux chaînons (5 et 8),
   — qui sont reliés entre eux par une pièce intermédiaire (7),
   — et dont chaque chaînon (5 et 8) est constitué par des éléments individuels (5a, 5b et 8a, 8b), disposés parallèlement et à distance entre eux et accrochés à la pièce intermédiaire,
— la pièce intermédiaire (7) comportant des appendices de guidage (17a et 17b) pénétrant dans les ouvertures des éléments individuels (8a, 8b),
— et avec une soupape de pesée contrôlant une pression moyenne de la pression initiale, proportionnelle à l'effort de traction qui s'exerce sur la suspension à double crochet (6),

   — soupape qui est articulée, par l'intermédiaire d'au moins une pièce intermédiaire (12, 13), à la suspension à double crochet (6) et qui est chargée par l'effort de traction dans cette dernière,
   — et dont l'axe de mesure s'étend coaxialement à l'axe médian longitudinal de la suspension accrochée (6),
caractérisé par le fait que,
— la pièce intermédiaire (7) comporte une première et une seconde pièces intermédiaires (12 et 13),
   — dont l'une (12) est accrochée à l'un (8) et l'autre (13) à l'autre chaînon (5),
   — dont au moins l'une (12) comporte un appendice de guidage (17a et 17b),
— un dispositif de guidage étant prévu qui déplace parallèlement entre eux et en direction de l'axe médian longitudinal les deux pièces intermédiaires (12 et 13) sur une course limitée,
— et la soupape de pesée étant disposée entre les deux pièces intermédiaires (12 et 13) et appuyant ces dernières l'une contre l'autre, dans la direction de l'effort de traction.

2. Dispositif de pesée selon la revendication 1, caractérisé par le fait que la première pièce intermédiaire (12) comporte une section (pièces de pression 19) qui attaque par l'arrière, dans la direction de l'effort de traction, la seconde pièce intermédiaire (13), et que la soupape de pesée qui est susceptible d'être chargée par la force de pression, est disposée entre cette section et la seconde pièce intermédiaire (13).

3. Dispositif de pesée selon la revendication 2, caractérisé par le fait que la seconde pièce intermédiaire (13) comporte, près du point d'accrochage des éléments individuels (5a et 5b) des ouvertures qui sont traversées par des tirants d'ancrage qui sont disposés de façon correspondante sur la première pièce intermédiaire (12), en s'étendant dans la direction de l'effort de traction, et dont les extrémités sont reliées avec une pièce de pression (19) qui forme la section.

4. Dispositif de pesée selon la revendication 3, caractérisé par le fait que la seconde pièce intermédiaire (13) comporte, comme ouvertures, deux perçages (21a et 21b) dans lesquels sont guidés les deux tirants d'ancrage cylindriques de la première pièce intermédiaire (12).

5. Dispositif de pesée selon la revendication 4, caractérisé par le fait que la pièce de pression (19) est fixée à la première pièce intermédiaire (12) à l'aide de deux vis (18a et 18b) qui constituent les tirants d'ancrage et qui sont entourées, au niveau des perçages (21a et 21b), par des douilles (20a et 20b).

6. Dispositif de pesée selon la revendication 4 ou 5, caractérisé par le fait que la soupape de pesée est disposée dans la seconde pièce intermédiaire (13), entre les perçages (21a et 21b) de cette dernière.

7. Dispositif de pesée selon la revendication 6, caractérisé par le fait que la soupape de pesée est réalisée, de façon connue en soi, avec une démultiplication de forces, par un milieu (plaque de caoutchouc 29) déformable et de volume largement constant, et que la seconde pièce intermédiaire (13) constitue directement le boîtier de soupape pour la soupape de pesée.

Fig. 1

Fig. 2